# EUROPEAN PATENT SPECIFICATION

(11) **EP 4 561 961 B1**
(45) Date of publication and mention of the grant of the patent: **05.11.2025**
(21) Application number: 24703802.9
(22) Date of filing: 08.02.2024
(51) Int. Cl.: C04B 33/04, B28B 3/12, C04B 33/13, C04B 33/16, C04B 33/24, C04B 33/32, C04B 33/34, C04B 35/626

(54) **METHOD FOR THE MANUFACTURE OF TILES OR SLABS OF COMPACTED CERAMIC MATERIAL**
VERFAHREN ZUR HERSTELLUNG VON FLIESEN ODER PLATTEN AUS VERDICHTETEM KERAMISCHEM MATERIAL
PROCÉDÉ DE FABRICATION DE CARREAUX OU DE DALLES EN MATÉRIAU CÉRAMIQUE COMPACTÉ

(30) Priority: 08.02.2023 EP 23382114
(43) Date of publication of application: 04.06.2025
(73) Proprietor: Cosentino Research & Development, S.L., 04850 Cantoria, Almería (ES)
(72) Inventor: BENITO LÓPEZ, José Manuel, 04850 Cantoria, Almería (ES); ÁLVAREZ DE DIEGO, Javier, 04850 Cantoria, Almería (ES)
(74) Representative: ABG Intellectual Property Law, S.L.
(86) International application number: PCT/EP2024/053171
(87) International publication number: WO 2024/165667

(56) References cited:
- EP-A2- 1 293 491
- WO-A1-2016/193500
- IT-A1- 201800 009 672

## Description

### Field of the Invention

The invention relates to methods for the manufacture of tiles or slabs, particularly large format tiles or slabs, comprising a ceramic material, such as a highly compacted ceramic material. These tiles or slabs can be used for construction and decoration applications.

### Background of the Invention

There is currently an ongoing trend in the market of the ceramic tiles towards tiles or slabs of large dimensions (or large format) having extremely reduced open porosity and water absorption, together with outstanding mechanical and chemical/UV resistance.

Many of these large format tiles or slabs comprise a highly compacted vitrified porcelain ceramic layer, frequently incorporating additional layers or deposits for decoration, protection or texturization, applied to one or both major surfaces of the ceramic layer. The tiles or slabs are normally considered to have large format when they exceed for example 1.2 m x 0.6 m, and they can reach up to 3.2 x 1.6 m or more, in a variety of thicknesses from 3 mm to 30 mm.

The large sized tiles or slabs, which can be provided with very rich surface and body decorations, are finding increased use in applications where large format slabs of natural or artificial stones were previously employed, such as kitchen or vanity countertops, kitchen splashbacks, wall siding, furniture cladding, tabletops, ventilated façade tiles, stovetops, fireplaces, among others. For most of these applications, the large sized tiles or slabs, frequently of 12 - 30 mm thickness, need to be cut-to-size, to make them fit to the intended use (e.g. as kitchen countertop, façade tile or as tabletop).

Compositions and processes for the manufacture of the referred large format tiles or slabs are known, with multiple manufacturers currently commercializing those products and the machinery for their production at industrial scale.

The process for the manufacture of large format tiles or slabs normally starts with the provision of discrete ceramic agglomerates (also known as ceramic powder) with controlled humidity from mineral and synthetic raw materials. The ceramic agglomerates may be formed by partially spray-drying a slip of a raw material fine particle mixture. The ceramic agglomerates are dispensed into a conveyor or mold, where they are formed to the shape of a layer. The layer is then compacted to high pressure. Additional layers, deposits or precursors thereof, may be applied to the compacted layer, for example to one or both major surfaces of the compacted layer, with the aim of providing decoration, protection, texturization, functionality or other superficial effects to the ceramic tile being manufactured. Such layers, deposits or precursors thereof include for example glazes, engobes, frits, grits, (ceramic) inks, their precursors, or mixtures thereof. The compacted layer can be dried to reduce its humidity content, before it is fired with a temperature profile having a maximum in the range 1,000-1,200 °C.

Traditionally, the compaction of ceramic agglomerates or powders has been conducted with a hydraulic axial press. WO2016193500 discloses embodiments of a method for manufacturing compacted ceramic materials, including slabs of 3.2 x 1.44 m² surface and 0.7-3 cm, with low porosity, by firing certain mixtures of clays and feldspar to a maximum temperature of 1.000 - 1.200 °C. According to the disclosure in this document, the compaction may be achieved with a continuous pressing station reaching 30-110 kg/cm² followed by pressing at high pressures exceeding 400 kg/cm². WO2016193500 discloses the manufacture compacted ceramic materials with very low porosity comprising clay, kaolin and feldspars. In the examples, ultra-pressing at 450 kg/cm² is disclosed. According to the description in this document, a compacting step using a continuous pressing station at a pressure of 30-110 kg/cm² can be performed before the ultra-pressing step. However, no information is provided in WO2016193500 neither about any effect or benefit of this additional compacting step nor about the compacting problems in ceramic materials having significant amounts of calcium silicate.

It is also known, for instance from EP 1356909 B1, that the compaction can be done using only one continuous type press, generally consisting of at least one roller - or compactor belt - which effects a first pressing of the ceramic powders (or agglomerates) on an opposed flexible belt. Presses of the continuous type are nowadays frequently used as the only compacting device in the manufacture of large format tiles. These continuous presses are capable of reaching compaction pressures similar or slightly inferior to hydraulic axial presses traditionally used.

A sufficient and homogeneous compaction of the ceramic agglomerates is crucial for the subsequent manufacturing steps, and for transporting the compacted (unfired) layers to the kiln. The right level of compaction gives the unfired ceramic layer sufficient mechanical strength to withhold handling through the processing line. Homogeneous compaction and homogeneous unfired density, result in reduction of tensions and breakages of the tiles obtained after firing.

The ceramic layers used for the mentioned large format tiles or slabs are usually manufactured with different formulations resulting in different colorimetry, to address the demand for tiles having different chromatic effects, both in their exposed surfaces and through the tile thickness. When manufactured with the desired whiteness/lightness, high mechanical resistance, high density, and low porosity (low water absorption), the tiles based on those ceramic layers have a significant drawback that they can be difficult to cut, even for skilled stonemasons using specialized tools, more remarkably if the ceramic layer thickness in the slab or tile is ≥ 12 mm.

The inventors previously identified that the cutting behavior can be significantly improved by selecting formulations resulting in fired ceramic materials comprising a composition with certain combinations of oxides, which include selected ranges of SiO₂, Al₂O₃, CaO and MgO. The formulations may comprise raw materials which include 2-12 wt% of a calcium silicate material, based on the weight of the raw materials, the calcium silicate material comprising 9-50 wt% of CaO, such as wollastonite, diopside, tremolite, garnet and mixtures thereof.

It has now been unprecedentedly identified the problem that the formulations as those described in the previous paragraph, and which include significant amounts of calcium silicate such as wollastonite, diopside, tremolite, garnet and/or mixtures thereof, are more difficult to compact than other formulations known in the art for the manufacture of large format tiles. This is particularly the case when the fired ceramic material is desired to have a large thickness in the range 10 - 35 mm.

There exists therefore a need for an improved manufacturing process that addresses any or all of the shortcomings above.

EP 1293491 A2 refers to ceramic materials comprising wollastonite, which are obtained by kneading and extruding the raw materials into dough sheets. No pressing steps, neither continuous nor batchwise, are disclosed in this document.

### Summary of the Invention

In a first aspect, the disclosure herein is directed to a method for the manufacture of a tile or slab comprising a fired ceramic material that has a length of at least 1.2 m and a width of at least 0.6 m, wherein the method comprises:
a) preparing discrete agglomerates from a mixture of ceramic raw materials; the mixture of ceramic raw materials comprising 25-45 wt% of clay materials, and 55-75 wt% of non-clay materials, based on the weight of the mixture of ceramic raw materials,
b) dispensing the agglomerates onto a first conveyor and shaping them to provide a shaped material with a length of at least 1.2 m and a width of at least 0.6 m;
c) compacting the shaped material to provide a compacted material;
d) firing the compacted material with a temperature profile having a maximum between 1,100°C and 1,200°C;
wherein:
(i) the non-clay materials comprise 2-12 wt% of a calcium silicate material based on the weight of the mixture of ceramic raw materials, the calcium silicate material being selected from wollastonite, diopside, tremolite, garnet, and mixtures thereof, and
(ii) compacting step c) comprises, sequentially:
   c1) compacting the shaped material at a pressure of 50-100 kg/cm² directly on the first conveyor, as it moves at a speed of 3-9 m/min between opposed rollers of a continuous press, to provide a pre-compacted shaped material,
   c2) compacting the pre-compacted shaped with a uniaxial hydraulic press at a pressure of 350-500 kg/cm².

In some embodiments of the method, the shaped material in b) has a thickness between 25-80 mm.

The inventors have unexpectedly found that by the method of the first aspect, a tile or a slab comprising a fired ceramic material, even of large thickness, can be efficiently manufactured with acceptable pace, low scrap generation and low number of defects and rejects, from a mixture of raw materials comprising significant amounts - such as 2-12 wt% based on the weight of the raw materials - of a calcium silicate material selected from wollastonite, diopside, tremolite, garnet and/or mixtures thereof. The inventors also made the observation that this mixture, if compacted using only one continuous press, results in delamination (formation of separated layers) of the shaped material, in much higher number of defects and rejects, in large scrap generation and low line speed and productivity, even if the pressure exerted by the continuous press is raised to 350 - 500 kg/cm². On the contrary, tile or slabs obtained from ceramic raw materials comprising significant amounts of calcium silicate materials can be very efficiently manufactured by a process comprising a first compacting step at a pressure of 50-100 kg/cm² with a continuous press at a speed of 3-9 m/min followed by a second compacting step at a pressure of 350-500 kg/cm² with a uniaxial hydraulic press.

The tiles or slabs obtained from the application of the method of the first aspect have advantages which are of particular importance when considering the manufacture and handling of pieces of large dimensions. Remarkably, the tiles or slabs according to the invention can be more efficiently cut with available tools. By this it is meant that the tiles or slabs of the invention can either be cut at a faster speed without defects and without damaging the cutting disk or tools, and/or that more tiles or slabs can be cut with the same disk without having to sharpen or replace it.

In a second aspect, the disclosure is directed to a tile or slab obtainable by the method of the first aspect.

In a third aspect, the disclosure is directed to the use of a tile or slab according to the second aspect, for the manufacture of a kitchen or vanity countertop, kitchen splashback, shower tray, wall or floor covering, furniture cladding, tabletop, ventilated façade tile, stovetop, stair-step, or fireplace.

In a fourth aspect, the disclosure is directed to a kitchen or vanity countertop, kitchen splashback, shower tray, wall or floor covering, furniture cladding, tabletop, ventilated façade tile, stovetop, stair-step, or fireplace made from a tile or slab according to the second aspect.

In a further aspect, the disclosure is directed to a method for the manufacture of a kitchen or vanity countertop, kitchen splashback, shower tray, wall or floor covering, furniture cladding, tabletop, ventilated façade tile, stovetop, stair-step, or fireplace which comprises cutting-to-size a tile or slab according to the second aspect.

### Description of the Figures

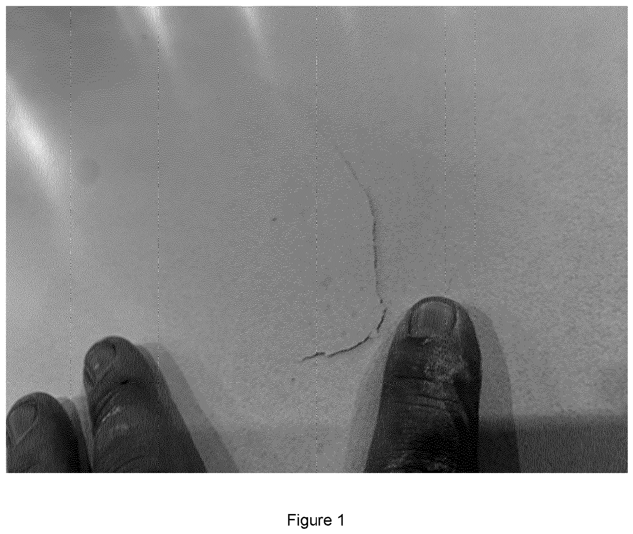

Figure 1 shows a photograph with an example of the compacting defect in the form of a blister of a material obtained according to comparative example 2.

### Detailed Description of the Invention

The term "ceramic material" or "fired ceramic material" as used herein refers to a material consisting of inorganic, polycrystalline, non-metallic compounds, the fundamental characteristic of which is that they are consolidated in solid state by means of high-temperature heat treatments (firing) and are formed by a combination of crystalline and glassy phases. The inorganic compounds are formed by metallic and non-metallic chemical elements bound by ionic or covalent bonds.

The (fired) ceramic material according to the present disclosure may be a compacted or ultra-compacted ceramic material. That is, a ceramic material that has been compacted at a pressure of at least 350 kg/cm², such as 350-500 kg/cm², or even 380-500 kg/cm². Through this disclosure, pressure is expressed in kg/cm² units. The expert understands the meaning of these units and assumes them to be kgf/cm² (kilogram-force per square centimeter), a unit of pressure.

The terms "tile" and "slab" as used herein are meant in general to refer to an essentially flat and uniform thickness article, such as of square or rectangular parallelepiped form, i.e. an article defining a length and a width, as well as a thickness of smaller dimension than the length and the width. These terms should be understood to include and be interchangeable with board, plate, plank, panel, sheet, block and the like. The terms "length", "width" and "thickness" are used herein as understood generally; e.g. "length" refers to the longest of the three dimensions of an object, "width" refers to the longest dimension of an object that is perpendicular to the length, and "thickness" refers to the remaining dimension that is perpendicular to the length and the width.

The skilled person readily understands that, when a composition or material is defined by the weight percentage values of all the components it comprises, these values can never sum up to a value which is greater than 100%. The amount of all components that said material or composition comprises adds up to 100% of the weight of the composition or material.

When the amount of a component of a composition, mixture or material is given by a range with a lower limit of 0 wt% or 0.0 wt%, this means that said composition, mixture or material may not comprise said component or comprise it in an amount not higher than the specified upper limit of the range.

In the present disclosure, the described percentages refer to w/w percentage (wt%) unless otherwise stated.

When a range is indicated in the present document, both lower and upper limits are included in said range.

The term "comprises" encompasses the terms "consisting essentially of" and "consisting of". Thus, at each occurrence in the present document, the term "comprising" may be replaced with the term "consisting essentially of" or "consisting of".

The expressions "obtainable", "obtained" and equivalent expressions are used herein interchangeably, and in any case, the expression "obtainable" encompasses the expression "obtained".

As used herein, the singular forms "a" "an" and "the" include plural reference unless the context clearly dictates otherwise.

Unless specifically stated otherwise, or unless they are clearly incompatible, all the embodiments disclosed in relation to an aspect of the disclosure are also applicable to the other aspects. It should be understood that the scope of the present disclosure includes all the possible combinations of embodiments disclosed herein, either belonging to the same aspect or to different aspects of the disclosure.

The fired ceramic material of the disclosure might be a porcelain material, for example a porcelain material as defined in section 3 of EN 14411:2016 or in section 3 of ISO 13006:2018. The fired ceramic material may be a porcelain material of the group I (either Al or BI), or a porcelain material of the group Bla, according to, for example, the classification in Table 1 of EN 14411:2016. The fired ceramic material might also be a porcelain stoneware.

The fired ceramic material may be characterized by having a water absorption of 0.0-0.5%, or 0.0-0.1%, or 0.0-0.06%, when measured e.g. according to ISO 10545-3:2018 (vacuum method). In particular embodiments, the water absorption of the ceramic material is ≤ 0.01% when measured according to this method.

According to the embodiments herein, the fired ceramic material might have an apparent density ≤2.55 g/cm³, such as 2.2-2.5 g/cm³, or 2.25-2.45 g/cm³, or 2.25-2.40 g/cm³, as measured for instance according to ISO 10545-3:2018 (vacuum method) standard.

It is also possible that the fired ceramic material of any of the embodiments has a rectangular parallelepiped form. It may be in the form of a layer. It has a large format, with a length of at least 1.2 m and with a width of at least 0.6 m, or at least 2.4 m length and at least 1.2 m width. In an embodiment, it has at least 3.1 m length and at least 1.3 m width. The length of the fired ceramic material may be 1.2-3.7 m, with a width of 0.6-1.8 m, or 2.4-3.7 m length and 1.2-1.8 width. In a further embodiment, the fired ceramic material has 3.1-3.7 m length and 1.3-1.8 m width.

The thickness of the fired ceramic material might range from 3-40 mm, or from 4-30 mm. In a particular embodiment, the thickness of the fired ceramic material might range from 12-40 mm, or from 12-30 mm.

The fired ceramic material can be 1,200-3,700 mm in length, 600-2,100 mm in width and 3-40 mm in thickness. In another embodiment, the fired ceramic material can be 2,000-3,700 mm in length, 1,000-2,100 mm in width and 10-40 mm, or 12-30 mm, in thickness. In a further embodiment, the fired ceramic material can be 2,400-3,600 mm in length, 1,200-1,700 mm in width and 10-40 mm in thickness, or 12-30 mm in thickness.

The fired ceramic material of any of the embodiments disclosed herein is a component of the slabs or tiles of the disclosure. The fired ceramic material might represent 85-100 wt%, or 90-100 wt%, of the total weight of the slab or tile. In an embodiment, the fired ceramic material represents 95-100 wt% of the total weight of the slab or tile.

In an embodiment, the tile or slab consists of the fired ceramic material of the disclosure.

Alternatively, the tile or slab may comprise additional materials or components besides the fired ceramic material, as known in the art. For example, it might comprise one or more layers or deposits of at least one additional material selected from additional ceramic or porcelain materials (different from the fired ceramic material of the invention), glazes, engobes, inks, frits, grits and mixtures thereof. Said additional materials are usually employed for decoration, protection and/or texturization.

In an embodiment, the fired ceramic material is in the form of a layer and the at least one additional material is in the form of a layer or deposit on one or both major surfaces of the fired ceramic material layer.

The at least one additional material may represent 0-10 wt%, or 0-5 wt%, of the total weight of the tile or slab.

The tile or slab according to the different aspects of the disclosure may have a large format, with a major surface with at least 1.2 m length and at least 0.6 m width, or at least 2.4 m length and at least 1.2 m width. In an embodiment, it might have at least 3.1 m length and at least 1.3 m width. The thickness of the tile or slab might range from 10-40 mm, or from 12-30 mm.

The tile or slab of the disclosure can be 1,200-3,700 mm in length, 600-2,100 mm in width and 3-40 mm in thickness. In another embodiment, it can be 2,000-3,700 mm in length, 1,000-1,900 mm in width and 10-40 mm, or 12-30 mm, in thickness. In a further embodiment, it can be 2,400-3,600 mm in length, 1,200-1,900 mm in width and 10-40 mm in thickness, or 12-30 mm in thickness.

The tiles or slabs of the aspects of this disclosure can be used for construction or decoration applications. They are particularly suitable as a surface for kitchen or vanity countertops, kitchen splashbacks, shower trays, wall or floor coverings, furniture cladding, tabletops, ventilated façade tiles, stovetops, profiles, fireplaces or similar.

Therefore, in another aspect, the disclosure is concerned with the use of a tile or slab manufactured according to the embodiments disclosed herein for the manufacture of a kitchen or vanity countertop, kitchen splashback, shower tray, wall or floor covering, furniture cladding, tabletop, ventilated façade tile, stovetop, stair-step, or fireplace. The tile or slab may be cut-to-size in the manufacture of these products.

In another aspect, this disclosure is directed to a kitchen or vanity countertop, kitchen splashback, shower tray, wall or floor covering, furniture cladding, tabletop, ventilated façade tile, stovetop, stair-step or fireplace made from a tile or slab manufactured according to the embodiments disclosed herein. In this aspect, the tile or slab may be cut-to-size to make the kitchen or vanity countertop, kitchen splashback, shower tray, wall or floor covering, furniture cladding, tabletop, ventilated façade tile, stovetop, stair-step or fireplace.

This disclosure, in an aspect, is directed to a method for the manufacture of a tile or slab comprising a fired ceramic material that has a length of at least 1.2 m and a width of at least 0.6 m, wherein the method comprises:
a) preparing discrete agglomerates from a mixture of ceramic raw materials; the mixture of ceramic raw materials comprising 25-45 wt% of clay materials, and 55-75 wt% of non-clay materials, based on the weight of the mixture of ceramic raw materials,
b) dispensing the agglomerates onto a first conveyor and shaping them to provide a shaped material with a length of at least 1.2 m and a width of at least 0.6 m;
c) compacting the shaped material to provide a compacted material;
d) firing the compacted material with a temperature profile having a maximum between 1,100°C and 1,200°C;
wherein:
(i) the non-clay materials comprise 2-12 wt% of a calcium silicate material based on the weight of the mixture of ceramic raw materials, the calcium silicate material selected from wollastonite, diopside, tremolite, garnet, and mixtures thereof, and
(ii) compacting step c) comprises, sequentially:
   c1) compacting the shaped material at a pressure of 50-100 kg/cm² directly on the first conveyor, as it moves at a speed of 3-9 m/min between opposed rollers of a continuous press, to provide a pre-compacted shaped material, and
   c.2) compacting the pre-compacted shaped material with a uniaxial hydraulic press at a pressure of 350-500 kg/cm².

As used herein, ceramic raw materials are meant to be the raw materials which upon processing and firing would result in a (fired) ceramic material. These ceramic raw materials might be natural or synthetic, such as minerals, frits, sintered materials, etc.

The ceramic raw materials are selected so that the ceramic material after firing has a composition comprising a desired combination of oxides. The skilled person is aware and understands how to calculate the proportion of each available ceramic raw material (clayey and non-clayey) based on their respective compositions, and how to combine them, to obtain the targeted composition of the ceramic material after firing. Specific ceramic raw materials may be exchanged by alternative materials with different composition, e.g. as they might be available in a certain geographic area, adjusting its proportion and the proportions of the other raw materials in the ceramic raw material mixture.

The ceramic raw materials used for the manufacture of the fired ceramic material are commercially available from well-known suppliers. The ceramic industry normally distinguishes between two groups of ceramic raw material, clay materials and non-clay materials. The ceramic raw materials in step a) comprise clay materials and non-clay materials. The amount of clay materials ranges from 25-45 wt% of the total weight of ceramic raw materials. The amount of non-clay materials ranges from 55-75 wt%.

In an embodiment, the mixture of ceramic raw materials in a) consists of 25-45 wt% clay materials and 55-75 wt% of non-clay materials; that is, the sum of the amount of clay materials and no-clay materials is 100 wt%.

The clay materials are those exhibiting high plasticity, such as bentonite clay, fire clay, stoneware clay, kaolin, ball clay, or mixtures thereof. Plasticity is the ability of the material to deform under a stress without rupture and without tendency to returning to the initial shape, a behavior broadly used to classify the raw materials in the ceramic industry.

The clay materials may comprise one or several of kaolin, bentonite clays, fire clays, stoneware clays, ball clays, or mixtures thereof. The clay materials may comprise 5-35 wt%, or 15-30 wt% of kaolin, with respect to the weight of the mixture of ceramic raw materials. The clay materials may comprise kaolin in an amount such that the ceramic raw materials comprise 5-35 wt%, or 15-30 wt% of kaolin based on the total weight of the mixture of ceramic raw materials. Kaolin refers to a clay containing the mineral kaolinite as its principal constituent, such as comprising more than 80 wt% kaolinite. The kaolin may be a low iron (e.g. Fe₂O₃ content < 1.0 wt%) kaolin having more than 30 wt% of Al₂O₃.

According to some embodiments, the clay materials may comprise 5-20 wt%, or 5-15 wt% of ball clay, based on the weight of the mixture of ceramic raw materials. Ball clay may be a clay comprising montmorillonite, illite, or both. Therefore, in an embodiment, the ceramic raw materials comprise 5-20 wt%, or 7-17 wt% of ball clay, such as a clay comprising montmorillonite and/or illite, based on the total weight of the mixture of ceramic raw materials.

The non-clay materials are those exhibiting low or no significant plasticity, and functionally work typically as fluxes, fillers, opacifiers, pigments or other additives. Non-clay materials may include feldspars, alumina, talc, wollastonite, diopside, tremolite, garnet, corundum, zircon, baddeleyte, quartz minerals, nepheline syenite, and/or mixtures thereof.

The non-clay materials in the mixture of ceramic raw materials, according to certain aspects of the disclosure, comprise 35-65 wt% of alkali feldspar, based on the total weight of the mixture of ceramic raw materials. In a particular embodiment, the non-clay materials comprise 40-62 wt% of alkali feldspar, based on the total weight of the mixture of ceramic raw materials. The alkali feldspar may be selected from sodium feldspar, potassium feldspar, mixed sodium/potassium feldspar, or mixtures thereof.

The term "feldspar" designates a group of naturally occurring aluminum silicate crystalline minerals formed by natural processes (e.g., metamorphism or crystallization in slowly cooled rocks at great terrestrial or magma depths), and found in rocks. The alkali feldspars according to the disclosure conform to the formula: X(Al,Si)₄O₈, where X can be an alkali metal such as K or Na, including sodium feldspar or potassium feldspar. The alkali feldspar, in certain embodiments, may be of high purity and/or low iron oxide content (e.g. with an Fe₂O₃ content of 0-0.5% wt% based on the weight of the alkali feldspar), and may be enriched by floating and magnetic separation.

In the case of sodium feldspar, the Na₂O content in its composition may be greater than 9.5% wt% with respect to the weight of sodium feldspar. For potassium feldspar, the K₂O content in its composition may be at least 10.5% wt% with respect to the weight of potassium feldspar. Mixed sodium/potassium feldspar refers to feldspar with a Na₂O content of 2.0-9.5% wt% and a K₂O content of 2.0-10.5% wt%, based on the weight of the mixed sodium/potassium feldspar. In either case, the Fe₂O₃ content in the alkali feldspar may be in the range 0-0.5% by weight, with respect to the weight of the alkali feldspar.

The non-clay materials comprise 2-12 wt% of a calcium silicate material selected from wollastonite, diopside, tremolite, garnet and mixtures thereof, based on the weight of the mixture of ceramic raw materials. According to embodiments of the method, the calcium silicate material has 9-50 wt% of CaO, or 20-50 wt% of CaO. In a particular embodiment, the calcium silicate material is selected from wollastonite, diopside and mixtures thereof.

In a particular embodiment, the wollastonite comprises at least 40 wt% of CaO, based on the weight of the wollastonite, and/or the diopside comprises at least 20 wt% of CaO, based on the weight of the diopside. The wollastonite and/or diopside might be natural minerals. The natural wollastonite and/or diopside materials might comprise accessory minerals. In some embodiments, the wollastonite mineral may have a CaO content of 40-50 wt% with respect to the weight of the wollastonite mineral. In the case of diopside mineral, the CaO content may be 20-26 wt% with respect to the weight of the diopside mineral. In the case of diopside mineral, alternatively or additionally, the CaO + MgO content may be 30-45 wt% with respect to the weight of the diopside mineral. The wollastonite and/or diopside might as well be synthetic, e.g. manufactured by high temperature treatment (such as sintering or melting) of other minerals, or by melting/quenching into amorphous frits, by processes known in the art. In the case of synthetic wollastonite, the CaO content may be of at least 40 wt% with respect to the weight of the synthetic wollastonite. Synthetic diopside may have a CaO content of 20-26 wt% with respect to the weight of the synthetic diopside. Additionally or alternatively, the synthetic diopside may have a CaO + MgO content of at least 30-45 wt% with respect to the weight of the synthetic diopside.

In certain aspects of the disclosure, the non-clay materials comprise, based on the total weight of the mixture of ceramic raw materials, 3-9 wt% of a magnesium containing material comprising 28.0-31.7 wt% of MgO with respect to the weight of the magnesium containing material.

In a particular embodiment, said magnesium containing material is a magnesium silicate, either natural or synthetic. The magnesium containing material may be talc (or steatite). Said magnesium containing material, magnesium silicate, or talc, may have a composition comprising 30.0-31.7 wt% of MgO, with respect to the weight of the magnesium containing material. In an embodiment, said magnesium containing material, magnesium silicate, or talc, may be comprised in the range 4-8 wt% based on the weight of the mixture of ceramic raw materials.

The non-clay materials may comprise, based on the total weight of the mixture of ceramic raw materials, 0-10 wt% of a zirconium containing material comprising 45-100 wt% of ZrO₂ based on the weight of this zirconium containing material. Said zirconium containing material may be selected from zircon or baddeleyite. In certain embodiments, the non-clay materials do not comprise any zircon, baddeleyite, or any zirconium containing material (synthetic or natural) that comprises at least 45 wt% of ZrO₂ based on the weight of the material.

The non-clay materials in the mixture of ceramic raw materials might comprise quartz minerals, understood as minerals having a quartz content higher than 70 wt%. In some embodiments, the mixture of ceramic raw materials may comprise, based on the total weight of the mixture of ceramic raw materials, 0-3 wt%, or 0-2 wt%, or 0-1 wt% of quartz mineral with a quartz content higher than 70 wt% based on the weight of the quartz mineral. In certain embodiments, the mixture of ceramic raw materials do not comprise any quartz mineral with a quartz content higher than 70 wt% based on the weight of the quartz mineral. That is, the ceramic raw materials either do not comprise any quartz mineral with a quartz content higher than 70 wt% or, if they do, they may comprise such quartz mineral an amount not higher than 3 wt%, 2 wt% or 1 wt%, based on the total weight of the mixture of ceramic raw materials. The quartz minerals with a quartz content higher than 70 wt% might be selected from the group of quartz, feldspathic sand, flint, silica sand, and mixtures thereof. Without wanting to be bound by theory, the absence or low content of quartz minerals in the mixture of ceramic raw materials is thought to minimize the effect of expansion/shrinkage of the ceramic material during firing and subsequent cooling, caused by quartz phase inversion at high temperature, what translates into lower internal stresses in the fired ceramic material produced.

In embodiments, the non-clay materials in the ceramic raw materials might also comprise carbonate minerals such as calcite or dolomite. However, in some embodiments, the carbonate mineral content in the ceramic raw materials, if present, is ≤3 wt%, or ≤1 wt%, based on the total weight of the mixture of ceramic raw materials. Therefore, the non-clay materials in the mixture of ceramic raw materials may comprise carbonate minerals, such as calcite or dolomite, in an amount of 0-3 wt%, or 0-1 wt%, based on the total weight of the mixture of ceramic raw materials.

The mixture of ceramic raw materials, comprising the combination of clay and non-clay materials, as used for the manufacture of the ceramic agglomerates in step a), when taken as a whole, may comprise Fe₂O₃ in a concentration ≤ 1.0 wt%, or ≤ 0.8 wt%, or even ≤ 0.6 wt%, and/or TiO₂ in a concentration ≤ 1.0 wt%, or ≤ 0.8 wt%, or even ≤ 0.6 wt%, based on the total weight of the mixture of ceramic raw materials. In other words, said mixture of ceramic raw materials might not comprise Fe₂O₃ and/or TiO₂, or if present, they are in an amount lower than the wt% disclosed above.

The manufacture of the fired ceramic material comprised in the slabs or tiles starts with the provision of discrete ceramic agglomerates (e.g. granulates, particulates or powders) from a mixture of ceramic raw materials (step a)). In an example, for the manufacture of the ceramic agglomerates, the raw materials might be ground, for example to a particle size under 63 micrometers, in a ball mill with water to produce an aqueous slip, which might be stored after sieving for later use. The slip is then spray-dried by pulverizing the slip through nozzles in an air stream of hot air, removing most of the water, and producing the discrete ceramic agglomerates which are discharged from the lower part of the spray-drier.

Other methods for the manufacture of the discrete ceramic agglomerates are possible, known in the technique, and within the scope of the invention. Thus, for instance, the ceramic agglomerates might be manufactured by grinding the raw materials without addition of large amounts of water, e.g. in pendular or hammer mills, and afterwards agglomerated in powder granulators with a small amount of water.

The term discrete means that the agglomerates have not been shaped or molded, e.g. in the form of a layer, but are in the form of individual or discrete units.

The discrete ceramic agglomerates may have a humidity of 6-11 wt% based on the weight of said agglomerates. The size of the diameter (particle size) of the agglomerates may range suitably from 125-800 micrometers.

In the present application, the term "agglomerates" usually refers to individual or discrete units of smaller particulate materials (e.g. granulates, particulates, or powder particles). This term encompasses discrete products of a variety of shapes and sizes, including grain particles, granulates, flakes, pellets, or combinations of these.

The discrete ceramic agglomerates are then dispensed onto a first conveyor (such as a conveyor belt) and shaped to form a shaped material, such as a layer, which might be continuous or discrete (step b)). Shaping shall be understood as the collection of a plurality of the discrete ceramic agglomerates into a defined and repeatable form or shape, e.g. by dispensation onto the surface of a conveyor, or into a mold. The shaped material or layer may be of uniform thickness, homogeneous, with minimal density and composition variations. To achieve the shaped material or layer of ceramic agglomerates, for example, the ceramic agglomerates might be transported from a reservoir where they are stored to a dispensing system which dispenses them onto the moving first conveyor (belt). Forming systems suitable are known in the art, for example for the formation of shaped materials or layers from spray-dried ceramic agglomerates. Other shaped material or layer forming methods are possible, known and within this disclosure.

The shaped material is provided with a length of at least 1.2 m and a width of at least 0.6 m. According to an embodiment, it is provided with at least 2.4 m length and at least 1.2 m width. In an embodiment, the shaped material is formed by dispensing a continuous layer of ceramic granulates. In that case, the width of the continuous layer may be 0.6 - 1.9 m, or 1.2 - 1.8 width.

In some embodiments of the method, the shaped material has a thickness between 25-80 mm, or 30 - 75 mm.

The shaped material or layer of ceramic agglomerates, resting on the first conveyor (belt), is subsequently compacted to high pressures. For this, the shaped material or layer (located on the first conveyor) is moved continuously to pass between opposed rollers of a continuous press. This type of continuous press is known in the art (e.g. PCR press from SACMI), and normally comprise at least one first roller and a second roller opposed or confronted along the thickness direction of the shaped material to be compacted. A first roller may be located underneath the first conveyor. The continuous press may be provided with a second conveyor (such as a conveyor belt) lining the second roller arranged on top of the first conveyor. Thus, in some embodiments, the shaped material or layer is continuously compacted between the first and second conveyors, by the pressure exerted by the opposed first and second rollers.

To be acceptable for industrial commercial production, the shaped material is moved continuously through the opposed rollers of the continuous press at a speed of 3-9 m/min, or 3-7 m/min. Slower compacting speeds through the continuous press are in principle possible, but highly undesirable for an efficient industrial production. The aspects of the present disclosure are limited to continuous compaction speeds higher than 3 m/min, and lower than 9 m/min. At slower speeds, the productivity is too low and the industrial operation is not efficient. At higher speeds, delamination and problems for handling the large format (unfired) shaped materials through the production line start to occur in unacceptable ratios.

The compaction pressure exerted by the continuous press is in the range 50-100 kg/cm². After continuous pressing, a pre-compacted shaped material is obtained. The term pre-compacted is used for clarity purposes only, and it is not intended to imply any limitation to the material. In some embodiments, the shaped material has a thickness 25-80 mm, or 30-75 mm, and the thickness of the pre-compacted material is reduced between 40-60 % in relation to the thickness of the shaped material.

The pre-compacted shaped material may be cut, for example, if it is shaped as a continuous layer, to the corresponding dimensions to result in the desired length and width of the tile being manufactured. The length of the pre-compacted material may be 1.2-3.7 m, with a width 0.6-1.8 m, or 2.4-3.7 m length and 1.2-1.8 width, or even 3.1-3.7 m length and 1.4-1.8 m width.

The pre-compacted shaped material in the form of a continuous layer may be cut transversely (this is, in the direction of its width) with a cutting unit that cuts "on-the-fly". With "on-the-fly" it is meant that the cutting tool (e.g. a cutting disk) is translated in the width direction of the pre-compacted shaped material and simultaneously also in its length direction, with the speed of movement in the length direction similar or substantially identical to the moving speed of the shaped material through the continuous press.

The pre-compacted shaped material is then compacted with a uniaxial hydraulic press, e.g by introducing it into the die cavity of this uniaxial hydraulic press. Differently from the continuous-type presses, the uniaxial hydraulic press is configured to work batchwise, one pre-compacted shaped material at a time. The hydraulic press comprises a punch that moves in the direction of the thickness of the pre-compacted shaped material (e.g. vertically), to come into (direct or indirect) contact with its surface and to further compact it. The pressure exerted by the hydraulic press in embodiments of the method of this disclosure ranges 350 - 500 kg/cm², or 380-500 kg/cm². After this compaction step, a compacted material (or layer) is obtained.

In some embodiments, layers, deposits or precursors thereof, may be applied to the pre-compacted or to the compacted materials (i.e. after step c1 or c2), for example to one or both major surfaces of the pre-compacted or compacted (unfired) ceramic material, with the aim to provide decoration, protection, texturization, functionality or other superficial effects to the fired ceramic material. Such layers, deposits or precursors thereof include for example glazes, engobes, frits, grits, inks, their precursors, or mixtures thereof. By precursor it is meant the substances, materials, mixtures or compositions, which result in the layers or deposits after being fired simultaneously with the compacted material. Additionally, or alternatively, the layers, deposits or precursors thereof may be applied to the ceramic material after firing (i.e. after step d)), and optionally subjecting the layers, deposits or precursors thereof on the fired ceramic material to subsequent additional steps such as firing, hardening or drying.

Optionally, the compacted (unfired) ceramic material, with or without additional layers, deposits or precursors thereof, can be dried to reduce the humidity content to 0.0-1.0 wt%, or 0.0-0.7 wt%, based on the weight of the compacted ceramic material, before the compacted material is fired (i.e., before step d)). This can be done for instance with the compacted material in horizontal orientation using conventional ceramic driers.

After compaction and optional drying, the compacted (unfired) ceramic material is fired with a temperature profile having the maximum in the range 1,100-1,200 °C, or 1,110-1,190 °C. In an embodiment, the temperature profile has a maximum in the range 1,150-1,190 °C. The temperature firing profile (or firing cycle) suitably includes pre-heating, heating and cooling phases, the cooling phase ending when the temperature reaches 60 °C. The firing profile (including pre-heating, heating and cooling phases) may have a duration ranging from 60-500 minutes, such as 70-440 minutes, depending on the thickness of the ceramic material being fired. The residence time at the maximum temperature may range from 5-70 minutes, depending on the thickness of the ceramic material being fired. In an embodiment, the residence time at the maximum temperature is in the range 5-55 minutes. Firing can be conducted in a roller kiln for high temperature or other type of kiln used for substantially flat ceramic products. This maximum firing temperature results in sintering, reaction and vitrification of the compacted raw materials, increasing the compactness and hardness of the fired ceramic material.

After firing, the tile or slab can be cut and/or calibrated to the desired final dimensions, and may be finished (polished, brushed, honed, etc.) on one or both of its larger surfaces, depending on the intended application.

In another aspect, the disclosure is directed to a tile or slab obtainable by the method of manufacture disclosed herein.

Unless otherwise specified, the proportions and concentrations of ceramic raw materials presented in this description, including the claims, refer to the "dry" materials, obviating or disregarding any humidity they might content.

It should be understood that the scope of the present disclosure includes all the possible combinations of embodiments disclosed herein.

### Definitions and testing methods:

Humidity content of raw materials and ceramic agglomerates, may be measured by weight difference by heating the sample in an ventilated oven at 110°C until constant weight, or in by using a thermobalance heating at 130°C until constant weight.

The particle size, also called particle diameter, of the agglomerates can be measured by known screening separation using sieves of different mesh size. The term "particle size" as used herein, means the range in which the diameter of the individual particles in the agglomerates falls. It can be measured by particle retention or passage on calibrated sieves that have measured mesh size openings, where a particle will either pass through (and therefore be smaller than) or be retained by (and therefore larger than) a certain sieve whose size openings are measured and known. Particle sizes are defined to be within a certain size range determined by a particle's ability to pass through one sieve with larger mesh openings or 'holes" and not pass through a second sieve with smaller mesh openings. For agglomerates with a particle size < 200 micrometers, the particle size distribution can be measured by laser diffraction with a commercial equipment (e.g. Malvern Panalytical Mastersizer 3000 provided with a Hydro cell). For the measurement, the agglomerate sample might be dispersed in demineralized water assisted by an ultrasound probe. The laser diffractometer provides particle distribution curves (volume of particles vs. particle size) and the D10, D50 and D90 statistical values of the particle population (i.e., particle size values where 10%, 50% or 90% of the sample particle population for a volume distribution lies below this value, respectively).

### Example according to the invention (Ex. 1) and comparative example (Ex. 2)

A first mixture of raw materials was added to an industrial ball grinding mill with water, griding them until a homogeneous slip is formed with a particle size predominantly under 63 micrometers (with a maximum of 1.0% of particles - in a volume distribution - above this size).

The raw materials in the first mixture comprised about 32 wt% of clay materials and about 68 wt% of non-clay materials, related to the weight of the raw materials. These weight percentages, and others used through the rest of the description of the examples, do not consider any humidity or water content that the raw materials may contain. The sum of the clay and non-clay materials made 100 wt% of the first mixture.

The clay materials comprised 15-25 wt% of kaolin and about 5-15 wt% of ball clay, both relative to the total weight of the first mixture.

The non-clay materials comprised 53-58 wt% of feldspar minerals, such as sodium feldspar, potassium feldspar and/or mixed alkali feldspars, based on the total weight of the first mixture of raw materials.

The raw materials of the first mixture comprised 5-6 wt% wollastonite (as part of the non-clay minerals) with respect to the total weight of the raw materials. Wollastonite had > 40 wt% of CaO related to the weight of the wollastonite.

Talc (as non-clay material) was comprised in the raw materials in an amount of approximately 6 wt% relative to the total weight of the raw materials. The talc comprised a content of MgO of at least 30 wt% with respect to its weight.

The first mixture did not comprise any purposedly added alumina, quartz mineral with a quartz content higher than 70 wt%, any carbonate mineral, or any zircon.

After wet grinding the raw materials, the slip obtained was partially dried in an industrial spray-drier to obtain powders having a humidity content of about 9-9.5 wt% and particle sizes predominantly <800 micrometers. The powders were then dispensed in the shape of a uniform first layer onto a conveyor. The first layer was continuous and had a width of approx. 1.5 m. The thickness of the first layer was set to about 30 mm.

In Example 1 according to aspects of the invention, the first layer of powders onto the conveyor was advanced to pass continuously between opposed rollers of a continuous press (such as a PCR press from SACMI Imola). The continuous press compacted the first layer continuously with a pressure of 60 kg/cm², at a speed of 5 m/min, forming a pre-compacted layer of powders.

The pre-compacted layer of powders in Example 1 was then cut into pieces having a length of approx. 3.5 m, and transported onto the conveyor to a uniaxial hydraulic press, where the pieces were compacted batchwise at a pressure of 420 kg/cm².

In a Comparative Example 2, the uniform layer of powders onto the conveyor were advanced to a continuous press (such as Continua+ from SACMI Imola), where the layer was continuously compacted at a pressure of 250 kg/cm², at a speed of around 4 m/min. After this, the compacted layer was cut to pieces having a length of approx. 3.5 m.

In Comparative Example 2, the pressure of the continuous press could not be increased any higher, without the compacted layer showing unacceptable degree of layers separation.

The compacted pieces of both Example 1 and Comparative Example 2 were further dried until a humidity content of 0-1 wt% was reached, and then fired inside a roller kiln reaching a maximum temperature in the range 1,160-1,200 °C, with a residence time at this maximum temperature of about 10-30 minutes.

After firing, large format slabs were obtained in both Example 1 and Comparative Example 2. The number of slabs obtained having compaction defects was registered. The most frequent of these defects were blisters as the one shown in Figure 1.

The compared productivity ratios of Example 1 and Comparative Example 2 are shown in the following table:

| | Example 1 | Comparative Example 2 |
|---|---|---|
| Total number of slabs produced | 3969 | 482 |
| Number of slabs having defects | 6 | 12 |
| Ratio (%) of slabs having defects | 0.15 | 2.49 |

## Claims

1. A method for the manufacture of a tile or slab comprising a fired ceramic material that has a length of at least 1.2 m and a width of at least 0.6 m, wherein the method comprises:
a) preparing discrete agglomerates from a mixture of ceramic raw materials; the mixture of ceramic raw materials comprising 25-45 wt% of clay materials, and 55-75 wt% of non-clay materials, based on the weight of the mixture of ceramic raw materials,
b) dispensing the agglomerates onto a first conveyor and shaping them to provide a shaped material with a length of at least 1.2 m and a width of at least 0.6 m;
c) compacting the shaped material to provide a compacted material;
d) firing the compacted material with a temperature profile having a maximum between 1,100°C and 1,200°C;
wherein:
(i) the non-clay materials comprise 2-12 wt% of a calcium silicate material based on the weight of the mixture of ceramic raw materials, the calcium silicate material selected from wollastonite, diopside, tremolite, garnet, and mixtures thereof, and
(ii) compacting step c) comprises, sequentially:
c1) compacting the shaped material at a pressure of 50-100 kg/cm² directly on the first conveyor, as it moves at a speed of 3-9 m/min between opposed rollers of a continuous press, to provide a pre-compacted shaped material, and
c2) compacting the pre-compacted shaped material with a uniaxial hydraulic press at a pressure of 350-500 kg/cm².

2. The method according to claim 1, **characterized in that** the shaped material in b) has a thickness 25-80 mm.

3. The method according to any one of claims 1-2, **characterized in that** the shaped material has the form of a continuous layer with a width of 0.6 - 1.9 m.

4. The method according to any one of claims 1-3, **characterized in that** the speed in step c1) is 3-7 m/min.

5. The method according to any one of claims 1-4, **characterized in that** the calcium silicate material is selected from wollastonite, diopside and mixtures thereof.

6. The method according to any one of claims 1-5, **characterized in that** the calcium silicate material is wollastonite comprising 40 - 50 wt% of CaO with respect to the weight of the wollastonite.

7. The method according to any one of claims 1-6, **characterized in that** the clay materials comprise 5-35 wt% of kaolin, based on the weight of the weight of the mixture of ceramic raw materials.

8. The method according to any one of claims 1-7, **characterized in that** the clay materials comprise 5-20 wt% of ball clay based on the weight of the mixture of ceramic raw materials.

9. The method according to any one of claims 1-8, **characterized in that** the non-clay materials comprise alkali feldspar in an amount of 35-65 wt%, based on the weight of the mixture of ceramic raw materials.

10. The method according to any one of claims 1-9, **characterized in that** the non-clay materials comprise a zirconium containing material comprising 45-100 wt% of ZrO₂, in an amount of 0-10 wt% based on the weight of the mixture of ceramic raw materials.

11. The method according to any one of claims 1-10, **characterized in that** the method comprises a step of providing a layer, deposit or a precursor thereof, of a glaze, pigment, engobe, grit, frit, ink or a combination thereof on the compacted material obtained after step c1) or after step c2) or after step d).

12. The method according to any one of claims 1-11, **characterized in that** the tile or slab has a length of 1.2-3.7 m, a width of 0.6-1.8 m, and a thickness of 12-30 mm.

## Patentansprüche

1. Verfahren zur Herstellung einer Fliese oder Platte, die ein gebranntes Keramikmaterial umfasst, und die eine Länge von zumindest 1,2 m und eine Breite von zumindest 0,6 m aufweist, wobei das Verfahren umfasst:
a) Vorbereiten diskreter bzw. separater Agglomerate aus einem Gemisch keramischer Rohmaterialien; wobei das Gemisch keramischer Rohmaterialien 25-45 Gew.-% Tonmaterialien und 55-75 Gew.-% Nicht-Tonmaterialien umfasst, und zwar bezogen auf das Gewicht des Gemischs keramischer Rohmaterialien;
b) Abgeben der Agglomerate auf einen ersten Förderer und Formen derselben dahingehend, ein Formmaterial mit einer Länge von zumindest 1,2 m und einer Breite von zumindest 0,6 m bereitzustellen;
c) Verdichten des Formmaterials dahingehend, ein verdichtetes Material bereitzustellen;
d) Brennen des verdichteten Materials mit einem Temperaturprofil mit einem Maximum zwischen 1.100°C und 1.200°C;
wobei:
(i) die Nicht-Tonmaterialien 2-12 Gew.-% eines Calciumsilikatmaterials bezogen auf das Gewicht des Gemischs keramischer Rohmaterialien umfassen, wobei das Calciumsilikatmaterial aus Wollastonit, Diopsid, Tremolit, Granat und Gemische davon ausgewählt ist, und
(ii) Verdichtungsschritt c) nacheinander umfasst:
c1) Verdichten des Formmaterials mit einem Druck von 50-100 kg/cm² direkt auf dem ersten Förderer, während es sich mit einer Geschwindigkeit von 3-9 m/min zwischen gegenüberliegenden Walzen einer kontinuierlichen Presse bewegt, um ein vorverdichtetes Formmaterial bereitzustellen, und
c2) Verdichten des vorverdichteten Formmaterials mit einer einachsigen hydraulischen Presse mit einem Druck von 350-500 kg/cm².

2. Verfahren nach Anspruch 1, **dadurch gekennzeichnet, dass** das Formmaterial in b) eine Dicke von 25-80 mm aufweist.

3. Verfahren nach einem der Ansprüche 1-2, **dadurch gekennzeichnet, dass** das Formmaterial die Form einer durchgehenden Schicht mit einer Breite von 0,6-1,9 m aufweist.

4. Verfahren nach einem der Ansprüche 1-3, **dadurch gekennzeichnet, dass** die Geschwindigkeit in Schritt c1) 3-7 m/min beträgt.

5. Verfahren nach einem der Ansprüche 1-4, **dadurch gekennzeichnet, dass** das Calciumsilikatmaterial aus Wollastonit, Diopsid und Gemische davon ausgewählt ist.

6. Verfahren nach einem der Ansprüche 1-5, **dadurch gekennzeichnet, dass** das Calciumsilikatmaterial Wollastonit ist, der 40-50 Gew.-% CaO bezogen auf das Gewicht des Wollastonits umfasst.

7. Verfahren nach einem der Ansprüche 1-6, **dadurch gekennzeichnet, dass** die Tonmaterialien 5-35 Gew.-% Kaolin bezogen auf das Gewicht des Gemischs keramischer Rohmaterialien umfassen.

8. Verfahren nach einem der Ansprüche 1-7, **dadurch gekennzeichnet, dass** die Tonmaterialien 5-20 Gew.-% Kugelton bezogen auf das Gewicht des Gemischs keramischer Rohmaterialien umfassen.

9. Verfahren nach einem der Ansprüche 1-8, **dadurch gekennzeichnet, dass** die Nicht-Tonmaterialien Alkalifeldspat in einer Menge von 35-65 Gew.-% bezogen auf das Gewicht des Gemischs keramischer Rohmaterialien umfassen.

10. Verfahren nach einem der Ansprüche 1-9, **dadurch gekennzeichnet, dass** die Nicht-Tonmaterialien ein zirconiumhaltiges Material, das 45-100 Gew.-% ZrO₂ umfasst, in einer Menge von 0-10 Gew.-% bezogen auf das Gewicht des Gemischs keramischer Rohmaterialien umfassen.

11. Verfahren nach einem der Ansprüche 1-10, **dadurch gekennzeichnet, dass** das Verfahren einen Schritt des Bereitstellens einer Schicht, Ablagerung oder einer Vorstufe davon aus Glasur, Pigment, Engobe, Körnung, Fritte, Tinte oder einer Kombination davon auf dem verdichteten Material umfasst, das nach Schritt c1) oder nach Schritt c2) oder nach Schritt d) erhalten wird.

12. Verfahren nach einem der Ansprüche 1-11, **dadurch gekennzeichnet, dass** die Fliese oder Platte eine Länge von 1,2-3,7 m, eine Breite von 0,6-1,8 m und eine Dicke von 12-30 mm aufweist.

## Revendications

1. Procédé pour la fabrication d'un carreau ou d'une dalle comprenant une céramique cuite qui a une longueur d'au moins 1,2 m et une largeur d'au moins 0,6 m, le procédé comprenant de :
a) préparer des agglomérats discrets à partir d'un mélange de matières premières céramiques, le mélange de matières premières céramiques comprenant 25 à 45 % en poids de matières argileuses et 55 à 75 % en poids de matières non argileuses, sur la base du poids du mélange de matières premières céramiques,
b) distribuer les agglomérats sur un premier convoyeur et les façonner pour fournir un matériau façonné d'une longueur d'au moins 1,2 m et d'une largeur d'au moins 0,6 m,
c) compacter le matériau façonné pour fournir un matériau compacté,
d) cuire le matériau compacté avec un profil de température ayant un maximum compris entre 1 100 °C et 1 200 °C,
dans lequel :
(i) les matières non argileuses comprennent 2 à 12 % en poids d'un silicate de calcium sur la base du poids du mélange de matières premières céramiques, le silicate de calcium étant choisi parmi de la wollastonite, du diopside, de la trémolite, du grenat et des mélanges de ceux-ci, et
ii) l'étape de compactage c) comprend, séquentiellement, de :
c1) compacter le matériau façonné à une pression de 50 à 100 kg/cm² directement sur le premier convoyeur, lorsqu'il se déplace à une vitesse de 3 à 9 m/min entre des rouleaux opposés d'une presse continue, pour fournir un matériau façonné pré-compacté, et
c2) compacter le matériau façonné pré-compacté avec une presse hydraulique uniaxiale à une pression de 350 à 500 kg/cm².

2. Procédé selon la revendication 1, **caractérisé en ce que** le matériau façonné en b) a une épaisseur de 25 à 80 mm.

3. Procédé selon l'une quelconque des revendications 1 et 2, **caractérisé en ce que** le matériau façonné a la forme d'une couche continue d'une largeur de 0,6 à 1,9 m.

4. Procédé selon l'une quelconque des revendications 1 à 3, **caractérisé en ce que** la vitesse à l'étape c1) est de 3 à 7 m/min.

5. Procédé selon l'une quelconque des revendications 1 à 4, **caractérisé en ce que** le silicate de calcium est choisi parmi de la wollastonite, du diopside et des mélanges de ceux-ci.

6. Procédé selon l'une quelconque des revendications 1 à 5, **caractérisé en ce que** le silicate de calcium est de la wollastonite comprenant 40 à 50 % en poids de CaO par rapport au poids de la wollastonite.

7. Procédé selon l'une quelconque des revendications 1 à 6, **caractérisé en ce que** les matières argileuses comprennent 5 à 35 % en poids de kaolin, sur la base du poids du mélange de matières premières céramiques.

8. Procédé selon l'une quelconque des revendications 1 à 7, **caractérisé en ce que** les matières argileuses comprennent 5 à 20 % en poids d'argile figuline sur la base du poids du mélange de matières premières céramiques.

9. Procédé selon l'une quelconque des revendications 1 à 8, **caractérisé en ce que** les matières non argileuses comprennent du feldspath alcalin en une quantité de 35 à 65 % en poids, sur la base du poids du mélange de matières premières céramiques.

10. Procédé selon l'une quelconque des revendications 1 à 9, **caractérisé en ce que** les matières non argileuses comprennent un matériau contenant du zirconium comprenant 45 à 100 % en poids de ZrO₂, en une quantité de 0 à 10 % en poids sur la base du poids du mélange de matières premières céramiques.

11. Procédé selon l'une quelconque des revendications 1 à 10, **caractérisé en ce que** le procédé comprend une étape consistant à fournir une couche, un dépôt ou un précurseur de celui-ci, d'un glacis, d'un pigment, d'un engobe, d'un grain, d'une fritte, d'une encre ou d'une combinaison de ceux-ci sur le matériau compacté obtenu après l'étape c1) ou après l'étape c2) ou après l'étape d).

12. Procédé selon l'une quelconque des revendications 1 à 11, **caractérisé en ce que** le carreau ou la dalle a une longueur de 1,2 à 3,7 m, une largeur de 0,6 à 1,8 m et une épaisseur de 12 à 30 mm.
